# EUROPEAN PATENT SPECIFICATION

(11) **EP 2 041 857 B1**
(45) Date of publication and mention of the grant of the patent: **31.07.2019**
(21) Application number: 07789424.4
(22) Date of filing: 18.06.2007
(51) Int. Cl.: H02K 5/14, H02K 11/026

(54) **A MOUNTING STRUCTURE FOR ELECTRIC MOTORS**
VORRICHTUNG ZUR HALTERUNG EINES ELEKTRISCHEN MOTORS
STRUCTURE DE MONTAGE POUR MOTEURS ÉLECTRIQUES

(30) Priority: 20.06.2006 IT BO20060477
(43) Date of publication of application: 01.04.2009
(73) Proprietor: SPAL Automotive S.r.l., 42015 Correggio (Reggio Emilia) (IT)
(72) Inventor: SPAGGIARI, Alessandro, 42015 Correggio (IT)
(74) Representative: Puggioli, Tommaso
(86) International application number: PCT/IB2007/001625
(87) International publication number: WO 2007/148195

(56) References cited:
- EP-A- 1 424 762
- DE-U1- 29 803 270
- FR-A- 2 797 110
- GB-A- 2 184 610

## Description

### Technical Field

This invention relates to a mounting structure for electric motors, in particular for low-power direct current motors of the type with permanent magnet polar stator cores.

### Background Art

Mounting structures for electric motors are known which are defined by a dish-like lid made of insulating plastic used not only as a half-shell for closing the motor but also as a single element for mounting the main components of the motor. More specifically, the lid mounts the shaft, the collector, the inductor housing seats, the polar stator cores and the brush holder sleeves. Mounting structures of this kind allow the production of electric motors which are reduced in length and which can advantageously be used, for example, in the automotive industry, for driving components such as, cooling fans, ventilators, power windows and so on, which must be housed in small spaces.

Although a motor with a mounting structure of this kind is relatively easy to assemble, some of the steps in the assembly process must be performed manually by an operator and are therefore rather slow and expensive. In particular, the operator has to manually fit the brush holder sleeves and the inductor housing seats and to manually connect the brushes, inductors, capacitors and other electrical components by crimping or soldering the contacts.

Further, the brush holder sleeves, which are made by folding respective brass plates into a tube shape, are themselves quite expensive.

### Disclosure of the Invention

This invention therefore has for an aim to propose a mounting structure for electric motors that reduces motor production costs.

The invention accordingly provides a mounting structure for electric motors that comprises the characteristics defined in any of the appended claims.

Document FR2797110 discloses a rotary electric machine comprising an assembly formed by a plastic part molded on a metal plate according to the injection molding technique.

Conductive metal circuit elements defining conductor tracks, are partially embedded in the plastic part during the injection, in order to isolate the tracks from the metal plate.

Document GB2184610 discloses an aluminium disc end cap for an electric motor comprising two brush holders and brush terminal mounting apertures.

Document EP1424762 refers to an end cap for a DC electric motor which comprises an inner part supporting chokes and capacitors of a noise suppression components, brushes and brush holders part of which are integrally moulded into the inner part.

Document DE29803270 discloses a DC motor which comprises a rear end shield and a plastic shell on which metal sheet parts are fastened with rivets.

### Brief Description of the Drawings

The invention will now be described with reference to the accompanying drawings which illustrate a preferred embodiment of it and in which:
- Figure 1 is a front perspective view of a first embodiment of the mounting structure for electric motors according to the invention;
- Figure 2 is a rear perspective view, with some parts cut away in order to better illustrate others, of the mounting structure of Figure 1;
- Figure 3 is a partial front view of a second embodiment of the mounting structure for electric motors according to the invention;
- Figure 4 is a schematic side view of a third embodiment of the mounting structure for electric motors according to the invention;
- Figure 5 is a schematic perspective view of the mounting structure of Figure 4;
- Figure 6 is a schematic perspective view of a detail of the mounting structure of Figures 4 and 5.

### Detailed Description of the Preferred Embodiments of the Invention

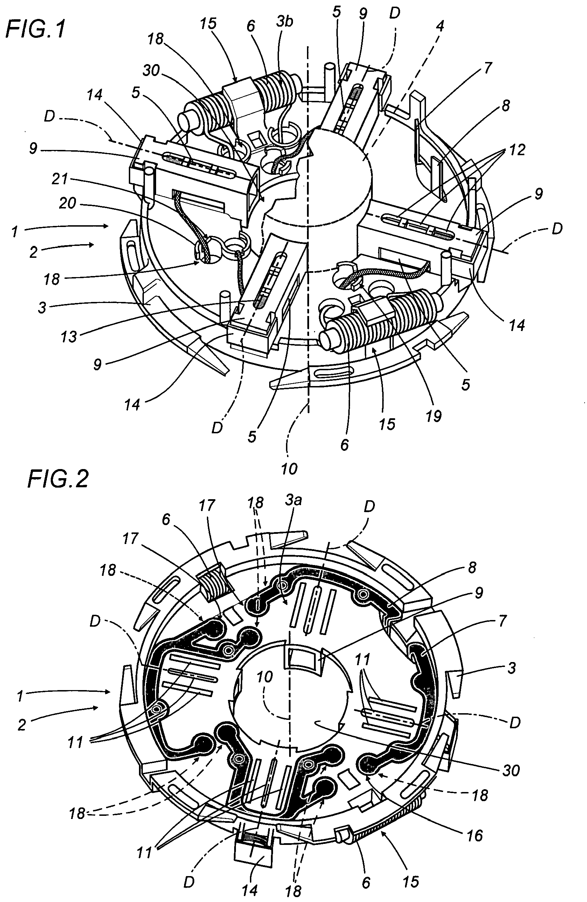

The numeral 1 in Figures 1, 2, 4 and 5 denotes a mounting structure or support for electric motors 2 or, more generally, rotary electric machines of the type comprising a stator assembly and a rotor assembly.

A preferred application of the mounting structure 1 is for low-power direct current motors 2 of the type with permanent magnet stator polar cores.

The structure 1 comprises a single element 3 for mounting a plurality of motor 2 components.

In particular, the motor 2 comprises a collector 4 (illustrated in dashed line style) and the element 3 mounts brushes 5 for powering the collector 4, the inductors 6; and the circuit tracks 7 and 8 which are used to interconnect and power the brushes 5 and the inductors 6.

The mounting element 3 is made from insulating plastic material. More precisely, the mounting element 3 is made as a single part by moulding a thermoplastic polymer reinforced with glass fibres, more specifically with a percentage of glass fibres of between 30% and 35%. The mounting element 3 has a first face 3a on the same side as the rotor assembly in the motor 2, and a second face 3b on the side opposite the rotor assembly in the motor 2.

The mounting element 3 has a central hole 30 through which the collector 4 passes. As illustrated in Figures 1 and 2, the mounting element 3 has sleeves 9 protruding from the face 3b of the element 3.

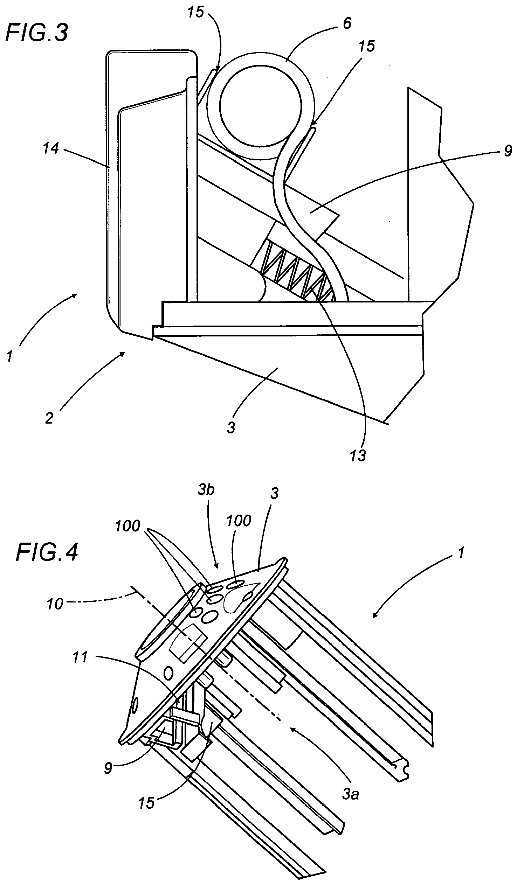

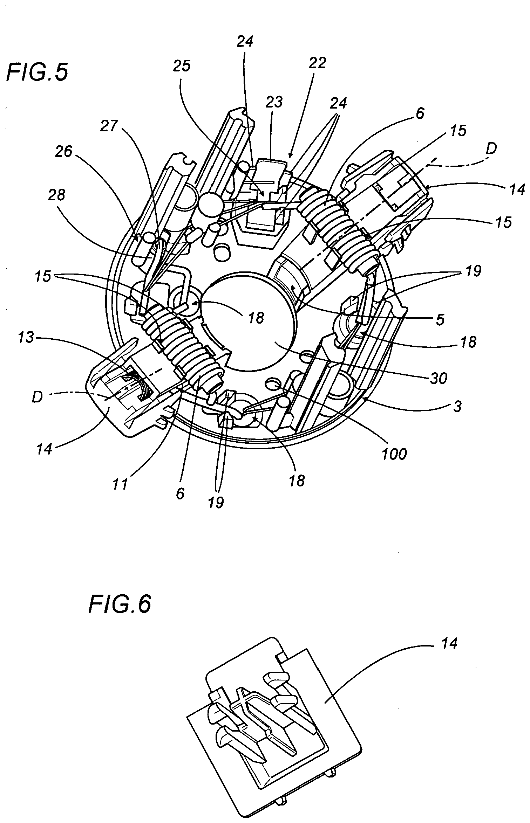

In Figures 4 and 5, the sleeves 9 on the mounting element 3 protrude from the face 3a of the element 3.

Each sleeve 9 is designed to hold and support a brush 5. The sleeves 9 are uniformly distributed around the central axis 10 of the collector 4, from which they extend in respective directions D, and are made as a single part with the mounting element 3 to form an integral part thereof.

In the embodiment shown in Figures 1 and 2, it should be noticed that the mounting structure 1 has four sleeves 9 for the brushes 5, while the embodiment of the structure 1 illustrated in Figures 4 and 5 has two sleeves 9 for the brushes 5 since it is designed for a motor 2 that delivers less power. To correctly dissipate the heat produced by the brushes 5, the sleeves 9 have ventilation holes 11, 12.

As illustrated in Figures 1 and 2, the ventilation holes 11 are made in the bottom of the mounting element 3 in the form of three slots parallel to the direction D and located side by side.

The ventilation holes 12, on the other hand, are made in the face of the sleeve 9 opposite the bottom of the mounting element 3 and take the form of three substantially rectangular openings in line with each other in the direction D.

As illustrated in Figures 4 and 5, the ventilation holes 11 are longitudinal slots made in the side walls of the sleeves 9. It should be noticed that, preferably, these longitudinal slots also have passing through them the metal braids for powering the brushes 5.

As shown in Figures 4 and 5, the mounting element 3 has a plurality of through holes 100 for dissipating heat.

Within each sleeve 9, the respective brush 5 is pushed towards the collector 4 by a helical spring 13 which is compressed by a closing element 14 that is slotted into the end of the sleeve 9 opposite the collector 4.

Figures 1 and 2 show how the sleeves 9 are arranged radially around the axis 10 of the motor 2 and the brushes 5 are pushed radially towards the collector 4. Advantageously, the closing elements 14 are made of the same material as the mounting element 3.

As may be inferred from Figure 5 in particular, the element 14 is used to protect the brushes 5 and the respective sleeves 9 by preventing entry of foreign matter from outside the motor.

The mounting element 3 incorporates seats 15 forming an integral part of it and designed to accommodate and support the respective inductors 6. Preferably, the seats 15 are located diametrically opposite each other, and each between two adjacent sleeves 9.

As illustrated in Figures 1 and 2, each seat 15 is defined by an L-shaped protrusion of the mounting element 3.

In the alternative embodiments illustrated in Figures 3, 4 and 5, where the sleeves 9 are inclined at an angle to the large bottom wall of the mounting element 3, the seats 15 for the inductors 6 are defined by respective protrusions outside the sleeves 9. In particular, the protrusions are substantially U-shaped so as to hold the respective inductor 6.

With reference to Figure 2 in particular, at the face opposite the one where the seats 15 are made, namely, the face 3a, the mounting element 3 also incorporates seats 16 and 17 for accommodating and supporting the above mentioned circuit tracks 7 and 8, again as an integral part of it, that is to say, obtained directly in the moulding process.

On the side opposite the seats 16 and 17, the mounting element 3 is shaped in such a way as to define seats 18, or pads, designed to receive respective solder points. Each seat 18 is open at the bottom at the respective circuit track 7, 8 to enable the latter to be soldered to the electrical lead of a brush 5 or inductor 6. Advantageously, the seats 18 to which the brush 5 leads are to be soldered are associated with clamping means 19 for positioning and securing the leads of the brushes 5 inside the third seats 18 and in a position ready for soldering. Thus, once all the electrical leads have been clamped in the respective seats 18 in the correct soldering position, soldering can be performed quickly and automatically using a soldering robot of substantially known type, falling outside the scope of this invention.

The clamping means 19 comprise a semicircular wall 20 which at least partly surrounds the respective seat 18 and has a groove 21 made in the middle of it and into which the electrical lead of the respective brush 5 can be inserted and held in place.

With reference to Figure 5, it should be noticed that the seats 18 that accommodate the soldering points necessary to apply the braids of the brushes 5 to the mounting structure 1 can also be used for other, substantially known, electrical components, such as the inductors 6, required for motor 2 operation.

The seats 18 are located on the face 3a of the mounting element 3.

As described above with reference to the mounting structure 1 of Figures 1 and 2, clamping means 19 are provided for positioning and securing the electrical leads of the respective components inside the seats 18, in a position ready for soldering. It should also be noticed that the structure 1 comprises means 22 for securing motor earthing means 23.

In particular, the securing means 22 are defined by a plurality of protuberances or tabs 24 made as a single part with the mounting element 3. More specifically, the earthing means 23 comprise an electrical connector 25 passing through the mounting structure 1 and the protuberances 24 are suitably positioned and shaped to retain the connector 25.

Advantageously, the earthing means 23 are suitably shaped to be coupled with the securing means 22.

In the preferred embodiment illustrated in particular in Figure 5, the single mounting element 3 has a housing 26 for a thermal protection device 27 of substantially known type and normally applied to motors to protect them against unwanted overheating.

The housing 26 comprises a suitably shaped wall 28 to retain the device 27. Advantageously, the wall 28 is made by moulding as a single part with the mounting element 3.

Preferably the device 27 is positioned and shaped in such a way that its lead is suitably located in a respective seat 18 ready for soldering.

## Claims

1. A mounting structure for electric motors, comprising a single element (3) for mounting a plurality of components of the motor (2), including at least the brushes (5); the mounting element (3) being made of an insulating plastic material; the mounting element (3) incorporating as an integral part of it, a plurality of sleeves (9) protruding from the bottom face of it and designed to accommodate and support the respective brushes (5), a plurality of first seats (15) designed to accommodate and support respective inductors (6) of the motor (2), a plurality of third seats (18), shaped as openings in the single element and designed to accommodate respective solder points, and clamping means (19) for positioning and securing the electrical leads of the brushes (5) and/or of the inductors (6) inside the third seats (18) and in a position ready for soldering, the mounting structure for electric motors being **characterised in that** the clamping means (19) comprise, for each third seat (18), a wall (20) at least partly surrounding the third seat (18) itself and having a groove (21) made in it into which the electrical leads of the brushes (5) and/or inductors (6) can be inserted and held in place.

2. The mounting structure for electric motors according to claim 1, **characterised in that** the first seats (15) are defined by protrusions outside the sleeves (9).

3. The mounting structure for electric motors according to claim 1 or 2, **characterised in that** the mounting element (3) incorporates, as an integral part of it, at least one second seat (16, 17) designed to accommodate and support at least one printed circuit track (7, 8) of the motor (2).

4. The mounting structure for electric motors according to claims 3, **characterised in that** the third seats (18) are open at the bottom where they face the circuit track (7, 8) to enable the electrical leads of the brushes (5) and/or inductors (6) to be soldered to the circuit track (7, 8).

5. The mounting structure for electric motors according to any of the claims from 1 to 4, **characterised in that** the sleeves (9) have ventilation holes (11, 12).

6. The mounting structure for electric motors according to any of the claims from 1 to 5, **characterised in that** the mounting element (3) is made of a thermoplastic polymer reinforced with glass fibres.

7. The mounting structure for electric motors according to any of the claims from 1 to 5, **characterised in that** the mounting element (3) is made as a single part by moulding a thermoplastic polymer reinforced with glass fibres.

8. The mounting structure for electric motors according to claim 6 or 7, **characterised in that** the glass fibres are present in a percentage of between 30% and 35%.

9. The mounting structure for electric motors according to claim 1, **characterised in that** the sleeves (9) extend from a face (3a) of the mounting element (3) on the same side as a rotor assembly of the motor (2).

10. The mounting structure for electric motors according to claim 1, **characterised in that** the sleeves (9) extend from a face (3b) of the mounting element (3) on the side opposite a rotor assembly of the motor (2).

11. The mounting structure for electric motors according to any of the claims from 1 to 10, **characterised in that** the mounting element (3) comprises means (22) for securing means (23) that connect the electric motor to earth.

12. The mounting structure for electric motors according to any of the claims from 1 to 11, **characterised in that** the mounting element (3) comprises a housing (26) for a thermal protection device (27).

13. An electric motor **characterised in that** it comprises a mounting structure (1) according to any of the foregoing claims from 1 to 12.

## Patentansprüche

1. Vorrichtung zur Halterung eines elektrischen Motors, umfassend ein einzelnes Element (3) zur Halterung einer Vielzahl von Komponenten des Motors (2), einschließend mindestens die Bürsten (5), wobei das Halterungselement (3) aus einem dämmenden Kunststoffmaterial besteht, wobei das Halterungselement (3) als wesentlichen Bestandteil eine Vielzahl an Hülsen (9) umfasst, die aus dessen Unterseite hervorstehen und ausgestaltet sind, um die jeweiligen Bürsten (5) aufzunehmen und zu stützen, eine Vielzahl an ersten Sitzen (15), die ausgestaltet sind, um jeweilige Induktoren (6) des Motors (2) aufzunehmen und zu stützen, eine Vielzahl an dritten Sitzen (18), die als Öffnungen im einzelnen Element ausgeformt und ausgestaltet sind, um jeweilige Lötpunkte aufzunehmen und Klemmmittel (19) zum Positionieren und Sichern der elektrischen Leitungen der Bürsten (5) und/oder Induktoren (6) in den dritten Sitzen (18) und in einer lötbereiten Position, wobei die Halterungsvorrichtung für elektrische Motoren **dadurch gekennzeichnet ist, dass** die Klemmmittel (19) für jeden dritten Sitz (18) eine Wand (20) umfassen, die mindestens teilweise den dritten Sitz (18) umgibt und eine Nut (21) aufweist, die darin ausgebildet ist, in die die elektrischen Leitungen der Bürsten (5) und/oder Induktoren (6) eingefügt und an Ort und Stelle gehalten werden können.

2. Halterungsvorrichtung eines elektrischen Motors nach Anspruch 1, **dadurch gekennzeichnet, dass** die ersten Sitze (15) durch Vorsprünge außerhalb der Hülsen (9) definiert sind.

3. Halterungsvorrichtung eines elektrischen Motors nach Anspruch 1 oder 2, **dadurch gekennzeichnet, dass** das Halterungselement (3) als wesentlichen Bestandteil mindestens einen zweiten Sitz (16, 17) umfasst, der ausgestaltet ist, um mindestens eine gedruckte Kreislaufbahn (7, 8) des Motors (2) aufzunehmen und zu stützen.

4. Halterungsvorrichtung eines elektrischen Motors nach Anspruch 3, **dadurch gekennzeichnet, dass** die dritten Sitze (18) an der Unterseite offen sind, wo sie der Kreislaufbahn (7, 8) zugewandt sind, um den elektrischen Leitungen der Bürsten (5) und/oder Induktoren (6) zu ermöglichen, an der Kreislaufbahn (7, 8) festgelötet zu werden.

5. Halterungsvorrichtung eines elektrischen Motors nach Anspruch 1 bis 4, **dadurch gekennzeichnet, dass** die Hülsen (9) Lüftungsöffnungen (11, 12) aufweisen.

6. Halterungsvorrichtung eines elektrischen Motors nach einem der Ansprüche 1 bis 5, **dadurch gekennzeichnet, dass** das Halterungselement (3) aus einem thermoplastischen, glasfaserverstärkten Polymer besteht.

7. Halterungsvorrichtung eines elektrischen Motors nach einem der Ansprüche 1 bis 5, **dadurch gekennzeichnet, dass** das Halterungselement (3) aus einem einzigen Teil besteht, indem ein thermoplastischer, glasfaserverstärkter Polymer geformt wird.

8. Halterungsvorrichtung eines elektrischen Motors nach Anspruch 6 oder 7, **dadurch gekennzeichnet, dass** ein Anteil von 30 bis 35 % Glasfasern enthalten ist.

9. Halterungsvorrichtung eines elektrischen Motors nach Anspruch 1, **dadurch gekennzeichnet, dass** sich die Hülsen (9) von einer Seitenfläche (3a) des Halterungselements (3) an derselben Seite wie eine Rotoranordnung des Motors (2) erstrecken.

10. Halterungsvorrichtung eines elektrischen Motors nach Anspruch 1, **dadurch gekennzeichnet, dass** sich die Hülsen (9) von einer Seitenfläche (3b) des Halterungselements (3) an der Seite erstrecken, die gegenständig zu einer Rotoranordnung des Motors (2) angeordnet ist.

11. Halterungsvorrichtung eines elektrischen Motors nach einem der Ansprüche 1 bis 10, **dadurch gekennzeichnet, dass** das Halterungselement (3) Mittel (22) für Sicherungsmittel (23) umfasst, die den elektrischen Motor mit der Erde verbinden.

12. Halterungsvorrichtung eines elektrischen Motors nach einem der Ansprüche 1 bis 11, **dadurch gekennzeichnet, dass** das Halterungselement (3) ein Gehäuse (26) für eine thermische Schutzvorrichtung (27) umfasst.

13. Elektrischer Motor, **dadurch gekennzeichnet, dass** er eine Halterungsvorrichtung (1) nach einem der Ansprüche 1 bis 12 umfasst.

## Revendications

1. Structure de montage pour moteurs électriques, comprenant un élément unique (3) servant à monter une pluralité de composants du moteur (2), incluant au moins les balais (5) ; l'élément de montage (3) étant constitué d'un matériau plastique isolant ; l'élément de montage (3) incorporant, en tant que partie intégrale de celui-ci, une pluralité de manchons (9) dépassant du côté inférieur de celui-ci et conçus pour loger et supporter les balais (5) respectifs, une pluralité de premiers sièges (15) conçus pour loger et supporter des inducteurs respectifs (6) du moteur (2), une pluralité de troisièmes sièges (18) façonnés comme des ouvertures dans l'élément unique et conçus pour loger des points de soudage respectifs, et des moyens de serrage (19) pour positionner et fixer les conducteurs électriques des balais (5) et/ou des inducteurs (6) à l'intérieur des troisièmes sièges (18) et dans une position prête pour le soudage, la structure de montage pour moteurs électriques étant **caractérisée en ce que** les moyens de serrage (19) comprennent, pour chaque troisième siège (18), une cloison (20) entourant au moins en partie le troisième siège (18) lui-même et comportant une rainure (21) réalisée en son sein dans laquelle les conducteurs électriques des balais (5) et/ou des inducteurs (6) peuvent être introduits et maintenus en place.

2. Structure de montage pour moteurs électriques selon la revendication 1, **caractérisée en ce que** les premiers sièges (15) sont définis par des saillies à l'extérieur des manchons (9) .

3. Structure de montage pour moteurs électriques selon la revendication 1 ou 2, **caractérisée en ce que** l'élément de montage (3) incorpore, en tant que partie intégrale de celui-ci, au moins un second siège (16, 17) conçu pour loger et supporter au moins une piste de circuit imprimé (7, 8) du moteur (2).

4. Structure de montage pour moteurs électriques selon la revendication 3, **caractérisée en ce que** les troisièmes sièges (18) sont ouverts à la base où ils font face à la piste de circuit (7, 8) pour permettre aux conducteurs électriques des balais (5) et/ou des inducteurs (6) d'être soudés à la piste de circuit (7, 8) .

5. Structure de montage pour moteurs électriques selon l'une quelconque des revendications de 1 à 4, **caractérisée en ce que** les manchons (9) comportent des orifices de ventilation (11, 12).

6. Structure de montage pour moteurs électriques selon l'une quelconque des revendications de 1 à 5, **caractérisée en ce que** l'élément de montage (3) est constitué d'un polymère thermoplastique renforcé avec des fibres de verre.

7. Structure de montage pour moteurs électriques selon l'une quelconque des revendications de 1 à 5, **caractérisée en ce que** l'élément de montage (3) est constitué d'une partie unique par moulage d'un polymère thermoplastique renforcé avec des fibres de verre.

8. Structure de montage pour moteurs électriques selon la revendication 6 ou 7, **caractérisée en ce que** les fibres de verre sont présentes dans un pourcentage compris entre 30 et 35 %.

9. Structure de montage pour moteurs électriques selon la revendication 1, **caractérisée en ce que** les manchons (9) se prolongent d'un côté (3a) de l'élément de montage (3) sur le même côté qu'un bloc rotor du moteur (2) .

10. Structure de montage pour moteurs électriques selon la revendication 1, **caractérisée en ce que** les manchons (9) se prolongent d'un côté (3b) de l'élément de montage (3) sur le côté opposé à un bloc rotor du moteur (2).

11. Structure de montage pour moteurs électriques selon l'une quelconque des revendications de 1 à 10, **caractérisée en ce que** l'élément de montage (3) comprend des moyens (22) pour des moyens de fixation (23) reliant le moteur électrique à la terre.

12. Structure de montage pour moteurs électriques selon l'une quelconque des revendications de 1 à 11, **caractérisée en ce que** l'élément de montage (3) comprend un logement (26) pour un dispositif de protection thermique (27).

13. Moteur électrique **caractérisé en ce qu'**il comprend une structure de montage (1) selon l'une quelconque des revendications de 1 à 12.
